# EUROPEAN PATENT APPLICATION

(11) **EP 2 949 928 A1**
(43) Date of publication of application: **02.12.2015**
(21) Application number: 15000094.1
(22) Date of filing: 15.01.2015
(51) Int. Cl.: F03G 7/10

(54) **Driving device**

(30) Priority: 26.05.2014 TW 103118269; 28.11.2014 TW 103141443
(71) Applicant: Hsu, Po-Jiy, Kaohsiung City 806 (TW); Hsu, Yi-Ping, Kaohsiung City 806 (TW)
(72) Inventor: Hsu, Yi-Ping, 806 Kaohsiung City (TW); Hsu, Chia-Ming, 806 Kaohsiung City (TW); Hsu, Ting-Chen, 806 Kaohsiung City (TW); Hsu Chu, Yu-Lien, 806 Kaohsiung City (TW)
(74) Representative: Zeitler Volpert Kandlbinder Patent- und Rechtsanwälte Partnerschaft mbB

(57) **Abstract**

A driving device (1) for driving a rotating shaft (21) includes a frame member (11), a magnetic pendulum unit (12), an electromagnetic unit (13) and a control unit (14). The magnetic pendulum unit (12) is rotatable about a center (112) of the frame member (11) through which a rotating shaft (21) extends and is connected co-rotatably to the rotating shaft (21). The electromagnetic unit (13) and the control unit (14) are spaced apart and are mounted on the frame member (11). The control unit (14) is configured to turn on and off the electromagnetic unit (13) to generate a magnetic force between the magnetic pendulum unit (12) and the electromagnetic unit (13) for facilitating rotation of the magnetic pendulum unit (12) and allow the magnetic pendulum unit (12) to pass by the electromagnetic unit (13), respectively.

## Description

This disclosure relates to a driving device, more particularly to a driving device for driving a rotating shaft.

A generator is usually driven by a conventional driving device, such as a windmill, a waterwheel, a steam turbine driven by fossil fuels (e.g., coal), for converting mechanical energy to electric power. However, since natural energy sources, such as wind power and water power, are unstable, the conventional driving device using such energy sources (e.g., the windmill and the waterwheel) cannot generate electric power stably. Further, due to the recent rise in environmental awareness, the conventional driving device driven by fossil fuels is unable to support environmental protection.

Therefore, the present disclosure is to provide a driving device for driving a rotating shaft. The driving device includes an annular frame, a magnetic pendulum unit, at least one electromagnetic unit and at least one control unit. The annular frame defines a center that allows the rotating shaft to extend therethrough. The magnetic pendulum unit is rotatable about the center of the annular frame and is configured to be connected co-rotatably to the rotating shaft. The at least one electromagnetic unit is mounted on the annular frame, and is diametrically opposite to an imaginary point located at a circumference of the annular frame with respect to the center. The at least one control unit is mounted at a segment of the annular frame toward which the magnetic pendulum unit approaches after passing by the imaginary point during rotation, and is spaced apart from the at least one electromagnetic unit. The at least one control unit is configured to turn on the at least one electromagnetic unit to generate a magnetic force for attracting the magnetic pendulum unit so as to facilitate rotation of the magnetic pendulum unit, and to turn off the at least one electromagnetic unit to stop generating the magnetic force so as to allow the magnetic pendulum unit to pass by the at least one electromagnetic unit.

Other features and advantages of the present disclosure will become apparent in the following detailed description of the embodiments of the disclosure, with reference to the accompanying drawings, in which:
FIG. 1 is a schematic front view of a first embodiment of an electric generating system according to the present disclosure;
FIG. 2 is a schematic side view of the first embodiment of the electric generating system, illustrating a magnetic pendulum unit connected to a rotating shaft;
FIG. 3 is a schematic front view illustrating rotation of the magnetic pendulum unit;
FIG. 4 is a schematic front view of a second embodiment of the electric generating system according to the present disclosure;
FIG. 5 is a perspective view of a third embodiment of the electric generating system according to the present disclosure;
FIG. 6 is a schematic front view of the third embodiment of the electric generating system;
FIG. 7 is a schematic side view of the third embodiment of the electric generating system;
FIG. 8 is a schematic side view of a fourth embodiment of the electric generating system, illustrating the electric generating system that includes an interconnecting unit connected to and driven by the rotating shaft, a main gear and a plurality of driven gears;
FIG. 9 is a schematic front view of the fourth embodiment of the electric generating system, illustrating the main gear connected to the interconnecting unit and meshing with the driven gears;
FIG. 10 is a perspective view of the fourth embodiment of the electric generating system, in which the main gear is an internal gear and the driven gears are external gears; and
FIG. 11 is a perspective view of a modification of the fourth embodiment of the electric generating system, in which the main gear is an external gear and the driven gears are internal gears.

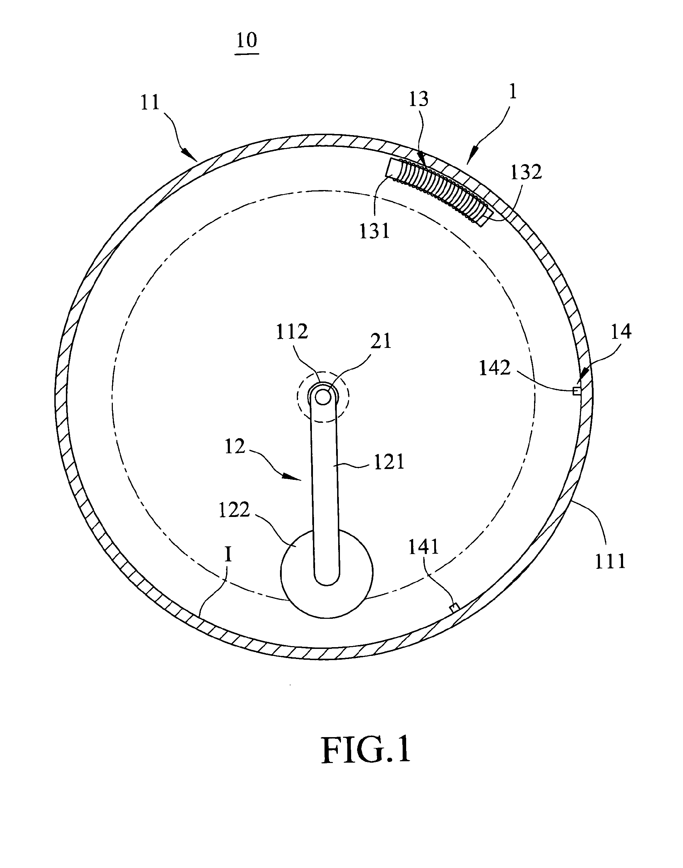

Referring to FIGS. 1 to 3, the first embodiment of the electric generating system 10 according to the present disclosure is shown. The electric generating system 10 includes a driving device 1 and a generator unit 2. The driving device 1 is configured for driving a rotating shaft 21, and includes an annular frame 11, a magnetic pendulum unit 12, an electromagnetic unit 13 and a control unit 14.

The driving device 1 is provided with an activating device 22 for driving the rotating shaft 21 and the magnetic pendulum unit 12 to rotate. The activating device 22 may be a hand-driven tool, an electrical mechanism or a combination thereof. The generator unit 2 is configured to be connected directly to the driving shaft 21 for converting kinetic energy into electric power.

The annular frame 11 includes a center 112 that allows the rotating shaft 21 to extend therethrough. The magnetic pendulum unit 12 is rotatable about the center 112 of the annular frame 11, and includes a lever 121 and a magnetic element 122. The lever 121 has two opposite ends, one of the opposite ends is configured to be connected co-rotatably to the rotating shaft 21, and the other one of the opposite ends is mounted with the magnetic element 122.

The electromagnetic unit 13 is mounted on the annular frame 11, and is diametrically opposite to an imaginary point (I) located at a circumference of the annular frame 11 with respect to the center 112. In this embodiment, the electromagnetic unit 13 is disposed within an inner space 111 that is defined by the annular frame 11 and that extends in a circumferential direction of the annular frame 11. The electromagnetic unit 13 includes a core 131 and a winding coil 132 wound on the core 131. The winding coil 132 is electrically connected to a power source (not shown) for providing electricity thereto. The power source may be a solar cell or other power supplies.

The magnetic element 122 of the magnetic pendulum unit 12 is attractable by a magnetic force generated by the electromagnetic unit 13 when the electromagnetic unit 13 is turned on.

The control unit 14 is mounted at a segment of the annular frame 11 toward which the magnetic pendulum unit 12 approaches after passing by the imaginary point (I) during rotation, and is spaced apart from the electromagnetic unit 13. In this embodiment, the control unit 14 is disposed within the inner space 111 of the annular frame 11. It should be appreciated that the electromagnetic unit 13 and the control unit 14 may be disposed at the outside of the annular frame 11. The control unit 14 includes a first sensor 141 and a second sensor 142. The first sensor 141 is electrically connected to the electromagnetic unit 13, and is configured for enabling the power source to provide electricity to the coil 132 so as to turn on the electromagnetic unit 13 upon detecting the magnetic element 122 of the magnetic pendulum unit 12.

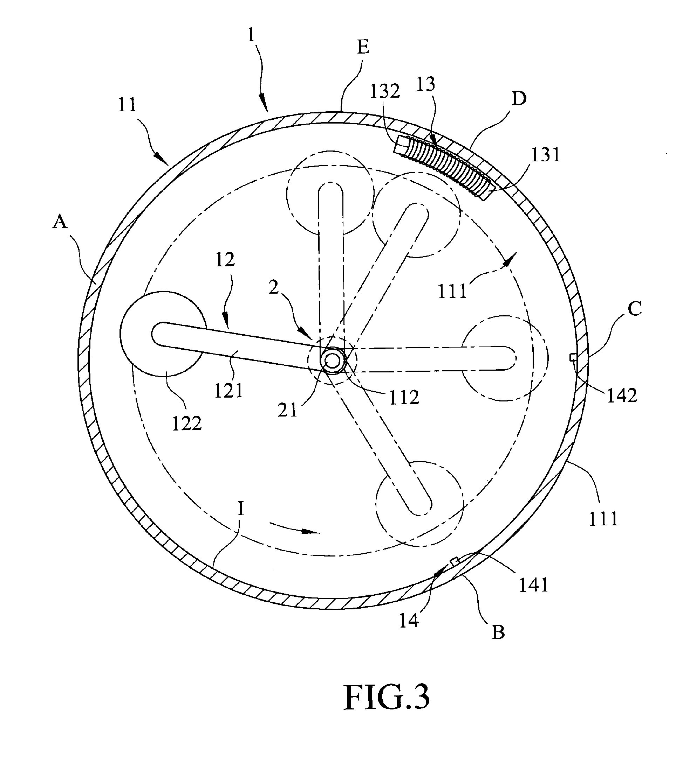

The second sensor 142 is spaced apart from the first sensor 141 in a rotation direction of the magnetic pendulum unit 12 (indicated by an arrow in FIG.3, i.e., a counterclockwise direction in this embodiment), is disposed between the first sensor 141 and the electromagnetic unit 13, and is electrically connected to the electromagnetic unit 13. The second sensor 142 is configured for disabling the power source to provide electricity to the coil 132 so as to turn off the electromagnetic unit 13 upon detecting the magnetic element 122. By this way, the control unit 14 can turn on the electromagnetic unit 13 to generate the magnetic force for attracting the magnetic element 122 of the magnetic pendulum unit 12 so as to facilitate rotation of the magnetic pendulum 12, and can turn off the electromagnetic unit 13 to stop generating the magnetic force to thereby allow the magnetic pendulum unit 12 to pass by the electromagnetic unit 13. For example, the first and second sensors 141, 142 are infrared sensors.

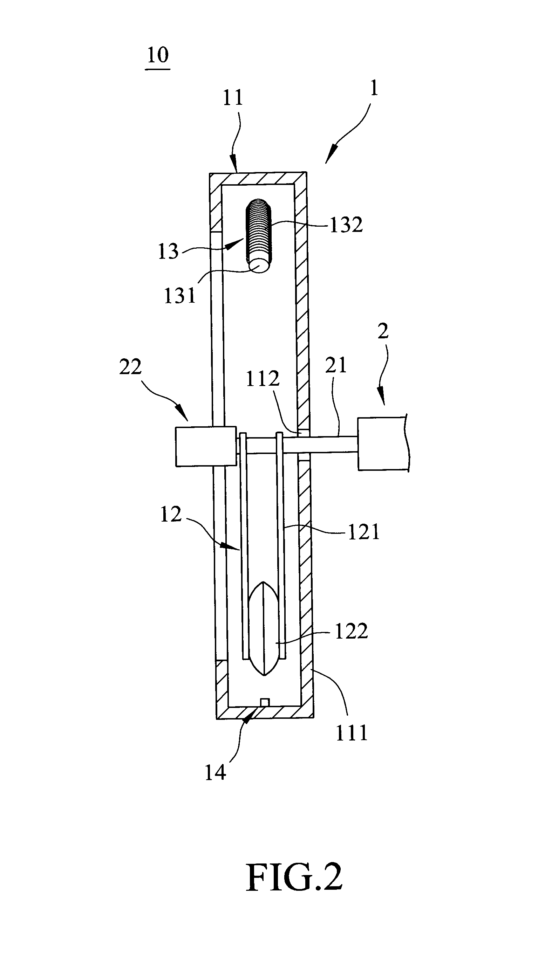

It should be noted that, as shown in FIGS. 1 and 2, the rotating shaft 21 is disposed horizontal to the ground and the annular frame 111 is disposed with a diameter thereof upright to the ground. In this way, the magnetic pendulum 12 hangs from the rotating shaft 21 and tends to fall downward. Further, in this embodiment, the electromagnetic unit 13 is disposed on the annular frame 11 opposite to the ground at a position that is deviated from the highest point of the annular frame 11 in a direction opposite to the rotation direction of the magnetic pendulum unit 12.

As shown in FIG. 3, the operational process of the driving device 1 of the present disclosure is illustrated. The activating device 22 (see FIG. 2) first drives the rotating shaft 21 and the magnetic pendulum unit 12 to rotate and moves the magnetic pendulum unit 12 to position (A). The magnetic pendulum unit 12 is then released and rotates freely in the counterclockwise direction (indicated by an arrow in FIG. 3) as a result of gravity's pull. Due to inertia, the magnetic pendulum unit 12 continues on to rotate to position (B), where the first sensor 141 is located, and the first sensor 141 detects the magnetic element 122 and turns on the electromagnetic unit 13 to generate magnetic force. Thus, rotation of the magnetic pendulum unit 12 toward the electromagnetic unit 13 is facilitated as a result of gravity being countered by the magnetic force generated by the electromagnetic unit 13 for attracting the magnetic element 122. The magnetic pendulum unit 12 then rotates to position (C), where the second sensor 142 is located, and the second sensor 142 detects the magnetic element 122 and turns off the electromagnetic unit 13. Thus, the electromagnetic unit 13 stops generating the magnetic force so as to allow the magnetic pendulum unit 12 to pass by the electromagnetic unit 13 to position (E), i.e., the highest point of the annular frame 11. Hereafter, the magnetic pendulum unit 12 continues to rotate in the counterclockwise direction toward position (A) due to the gravity and inertia, and the control unit 14 repeats detection of the magnetic element 122 to turn on and off the electromagnetic unit 13 as described above.

By virtue of the control unit 14 that is arranged on the annular frame 111 and that timely turns on and off the electromagnetic unit 13, the electromagnetic unit 13 interacts with the magnetic element 122 to facilitate continuous rotation of the magnetic pendulum unit 12 and the rotation shaft 21 to thereby generate kinetic energy to be converted to electric power by the generator unit 2. By this way, the driving device 1 of this disclosure can generate kinetic energy from the little electricity provided to the electromagnetic unit 13 in this embodiment.

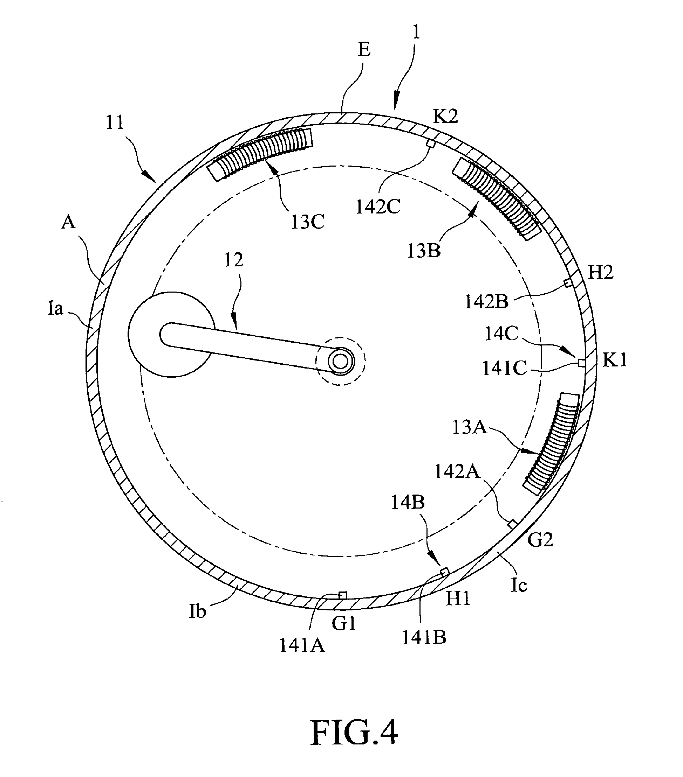

Referring to FIG. 4, the second embodiment of the electric generating system 10 of the present disclosure is shown to be similar to the first embodiment. The difference between the first embodiment and this embodiment resides in the following. The driving device 1 includes three electromagnetic units (13A, 13B, 13C), and three control units (14A, 14B, 14C) corresponding to the electromagnetic units (13A, 13B, 13C), respectively. The electromagnetic units (13A, 13B, 13C) are arranged on the circumference of the annular frame 11 within the inner space 111, and are spaced apart from each other along the circumference. The electromagnetic units (13A, 13B, 13C) are diametrically and respectively opposite to imaginary points (Ia, Ib, Ic) located at the circumference of the annular frame 111 with respect to the center 112.

Each of the control units (14A, 14B, 14C) is mounted at a segment of the annular frame 111 toward which the magnetic pendulum unit 12 approaches after passing by a respective one of the imaginary points (Ia, Ib, Ic) diametrically opposite to a corresponding one of the electromagnetic units (13A, 13B, 13C) during rotation. Each of the control units (14A, 14B, 14C) includes a first sensor (141A, 141B, 141C) and a second sensor (142A, 142B, 142C).

For each of the control units (14A, 14B, 14C), the first sensor (141A, 141 B, 141C) is electrically connected to the corresponding one of the electromagnetic units (13A, 13B, 13C), and is configured for turning on the corresponding one of the electromagnetic units (13A, 13B, 13C) upon detecting the magnetic element 122 of the magnetic pendulum unit 12. The second sensor (142A, 142B, 142C) is spaced apart from the first sensor (141A, 141B, 141C) in the rotation direction of the magnetic pendulum unit 12, and is disposed between the first sensor (141A, 141B, 141C) and the corresponding one of the electromagnetic units (13A, 13B, 13C). The second sensor (142A, 142B, 142C) is electrically connected to the corresponding one of the electromagnetic units (13A, 13B, 13C), and is configured for turning off the corresponding one of the electromagnetic unit (13A, 13B, 13C) upon detecting the magnetic element 122.

The operational process of the second embodiment is similar to that of the first embodiment. As shown in FIG. 4, after the magnetic pendulum unit 12 is driven and rotated by the activating device 22 to position (A), the magnetic pendulum unit 12 is released and rotates in the counterclockwise direction to position (G1), where the first sensor (141A) is located, and the first sensor (141A) detects the magnetic element 122 and turns on the electromagnetic unit (13A) to generate the magnetic force for attracting the magnetic element 122 so as to facilitate rotation of the magnetic pendulum unit 12 toward the electromagnetic unit (13A). The magnetic element 122 further rotates to position (H1), where the first sensor (141B) is located, and the electromagnetic unit (13B) is turned on to generate the magnetic force for attracting the magnetic element 122 upon detection of the magnetic element 122 by the first sensor (141B). Hereafter, the magnetic pendulum unit 12 rotates to position (G2), where the second sensor (142A) is located, and the second sensor (142A) detects the magnetic element 122 and turns off the electromagnetic unit (13A) to allow the magnetic pendulum unit 12 to pass by the electromagnetic unit (13A). Then, the pendulum unit 12 rotates to position (K1), where the first sensor (141C) is located. The electromagnetic unit (13C) is then turned on by the first sensor (141C) to generate the magnetic force for attracting the magnetic element 122, and the magnetic pendulum unit 12 further rotates toward the electromagnetic unit (13C) in the counterclockwise direction. When the magnetic pendulum unit 12 reaches position (H2), where the second sensor (142B) is located, the electromagnetic unit (13B) is turned off by the second sensor (142B) to allow the magnetic pendulum unit 12 to pass thereby. Finally, the magnetic pendulum unit 12 rotates to position (K2), where the second sensor (142C) is located, and the second sensor (142C) detects the magnetic element 122 and turns off the electromagnetic unit (13C) to allow the magnetic pendulum unit 12 to pass by position (E), which is the highest point of the annular frame 111, and the electromagnetic unit (13C). The abovementioned operational process is repeated to continuously generate kinetic power.

In this embodiment, the rotation speed of the magnetic pendulum unit 12 is increased.

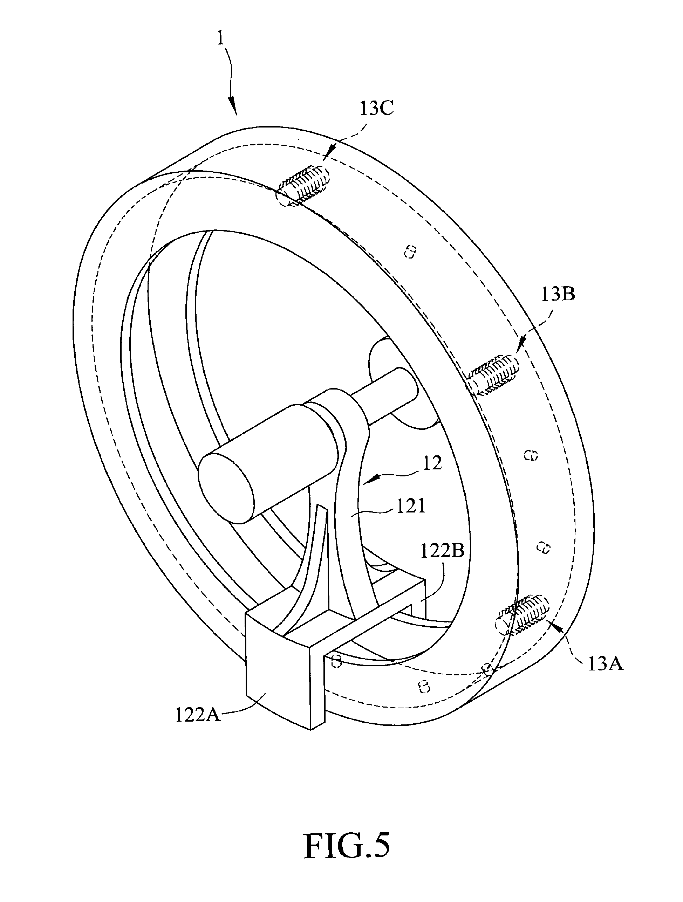

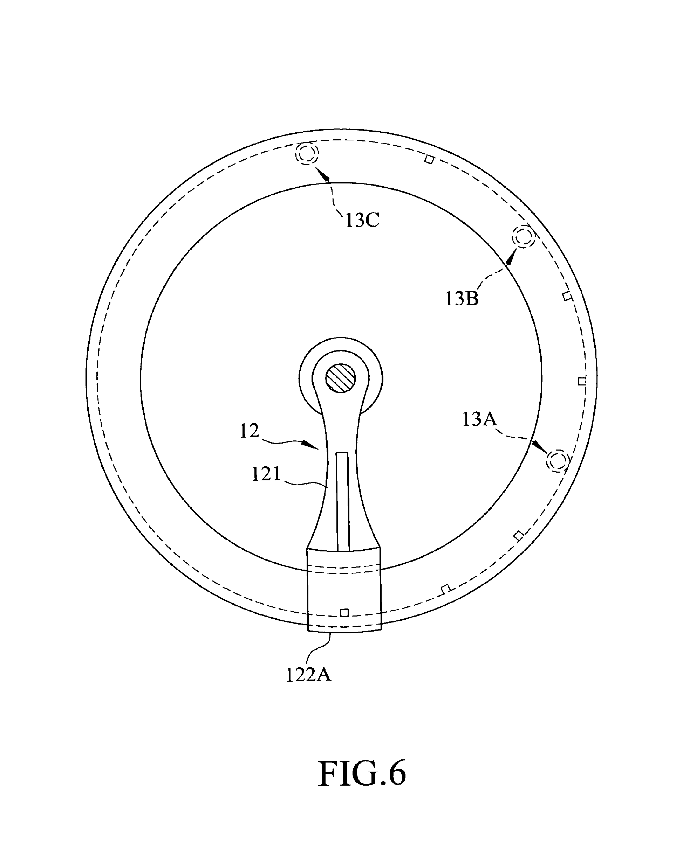

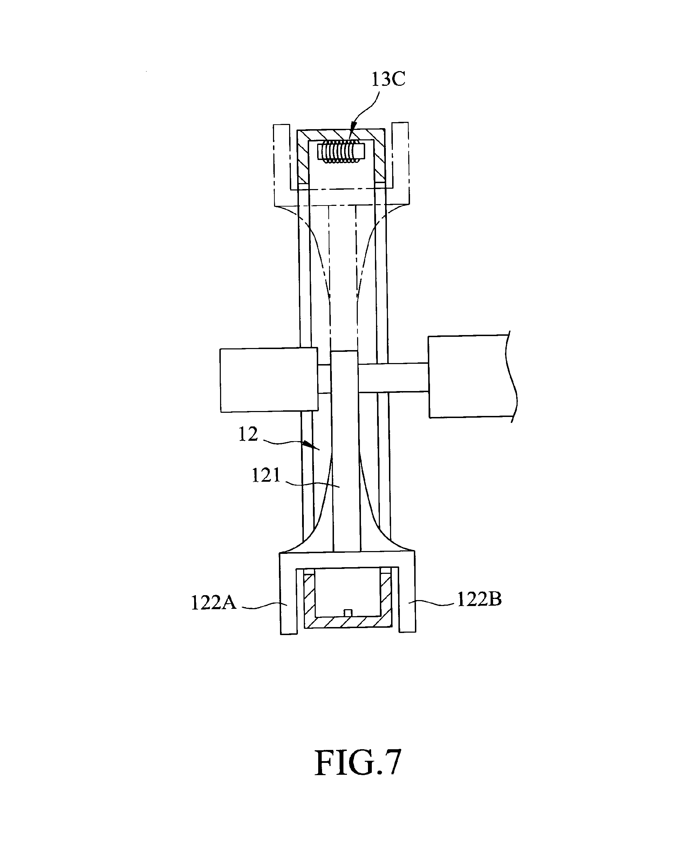

Referring to FIGS. 5 to 7, the third embodiment of this disclosure, which is similar to the second embodiment, is shown. The difference between the second embodiment and the third embodiment resides in that, in the third embodiment, the magnetic pendulum unit 12 includes two magnetic elements 122A, 122B. The magnetic elements 122A, 122B are fixedly mounted on the lever 121 at an end opposite to the rotating shaft 21, are spaced apart from each other in a direction parallel to the rotating shaft 21, and are attractable by the magnetic force generated by each of the electromagnetic units (13A, 13B, 13C). Note that the orientations of the electromagnetic units (13A, 13B, 13C) are modified in accordance with magnetic poles of the magnetic elements (122A, 122B).

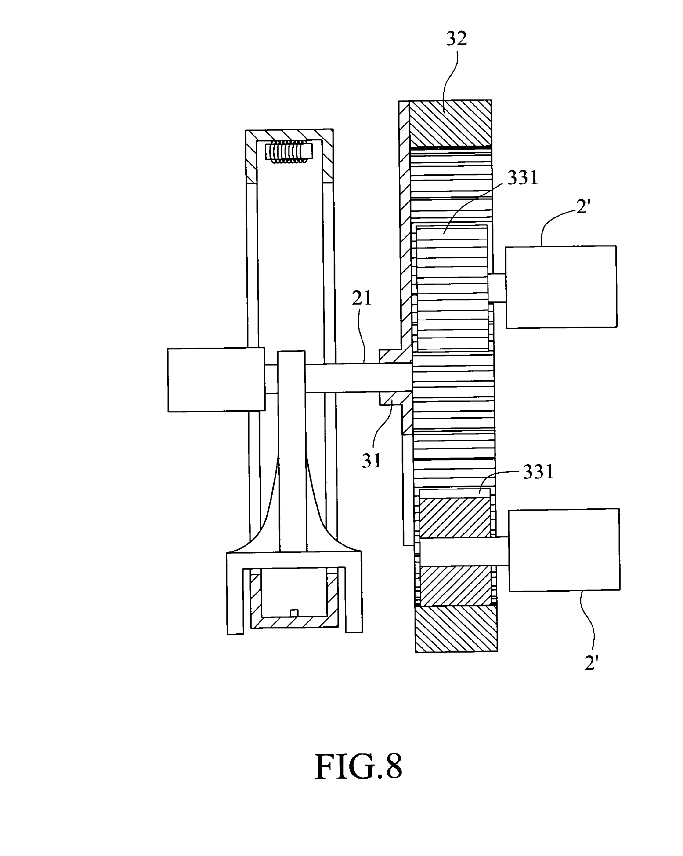

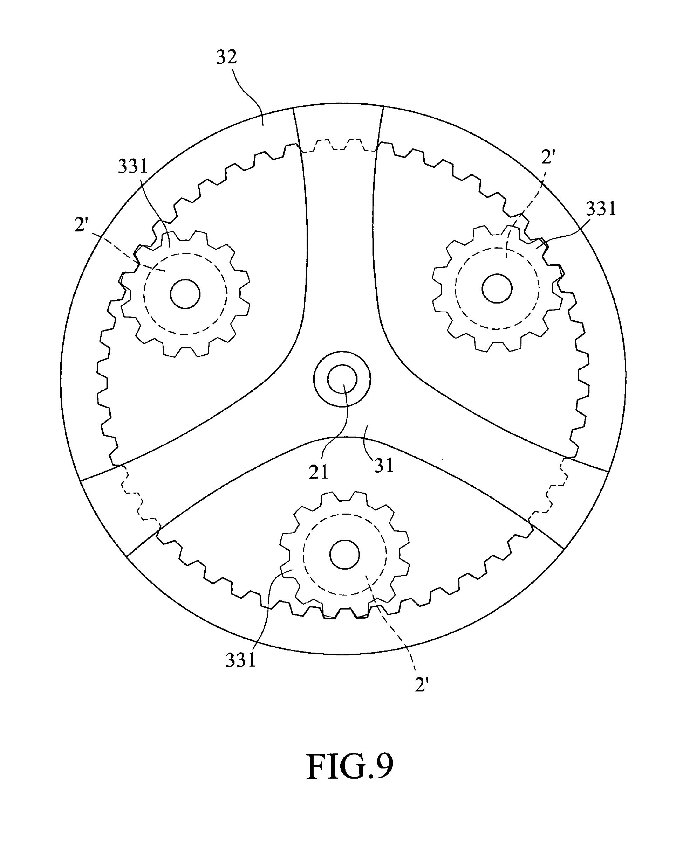

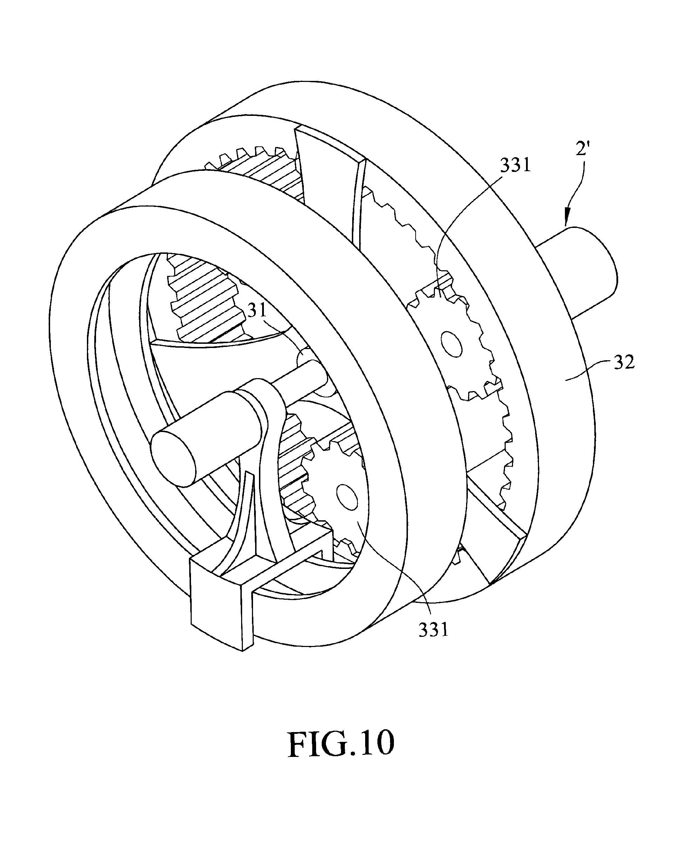

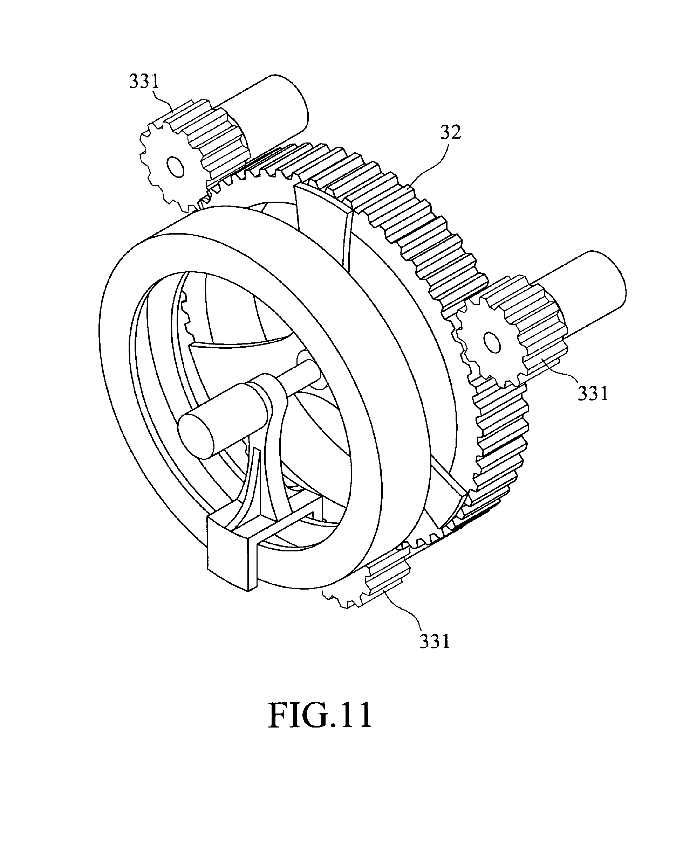

Referring to FIGS. 8 to 10, the fourth embodiment of the electric generating system 10 of the present disclosure is similar to the third embodiment, except that the electric generating system 10 of this embodiment further includes an interconnecting component 31, a main gear 32, a plurality of driven gears 331 and a plurality of generator units 2'. The interconnecting component 31 is connected to and driven by the rotating shaft 21 to rotate. The main gear 32 is connected to and driven by the interconnecting component 31. The driven gears 331 are meshed with and driven by the main gear 32. The generator units 2' are respectively connected to and driven by the driven gears 331 for converting kinetic energy into electric power. In this embodiment, the main gear 32 is an internal gear and the driven gears 32 are external gears. It should be noted that, referring to FIG. 11, the main gear 32 may be an external gear and the driven gears 331 may be internal gears; the disclosure is not limited in this respect.

## Claims

1. A driving device (1) for driving a rotating shaft (21), said driving device (1) being **characterized by**:
an annular frame (11) defining a center (112) that allows the rotating shaft (21) to extend therethrough;
a magnetic pendulum unit (12) being rotatable about said center (112) of said annular frame (11) and configured to be connected co-rotatably to the rotating shaft (21);
at least one electromagnetic unit (13) mounted on said annular frame (11), and diametrically opposite to an imaginary point located at a circumference of said annular frame (11) with respect to the center (112); and
at least one control unit (14) mounted at a segment of said annular frame (11) toward which said magnetic pendulum unit (12) approaches after passing by the imaginary point during rotation, and spaced apart from said at least one electromagnetic unit (13), said at least one control unit (14) being configured to
turn on said at least one electromagnetic unit (13) to generate a magnetic force for attracting the magnetic pendulum unit (12) so as to facilitate rotation of said magnetic pendulum unit (12), and
turn off said at least one electromagnetic unit (13) to stop generating the magnetic force so as to allow said magnetic pendulum unit (12) to pass by said at least one electromagnetic unit (13).

2. The driving device (1) as claimed in claim 1, **characterized in that** said magnetic pendulum unit (12) includes:
a lever (121) that has two opposite ends, one of said opposite ends being configured to be connected co-rotatably to the rotating shaft (21); and
a magnetic element (122) mounted on the other one of said opposite ends of said lever (121) and being attractable by the magnetic force.

3. The driving device (1) as claimed in claim 1 or 2, **characterized in that**:
said at least one electromagnetic unit (13) includes a plurality of electromagnetic units (13) arranged on the circumference of said annular frame (11) and spaced apart from each other along the circumference, each of said electromagnetic units (13) being diametrically opposite to an imaginary point located at the circumference of said annular frame (11) with respect to said center (112); and
said at least one control unit (14) includes a plurality of control units (14) corresponding to said electromagnetic units (13), respectively, each of said control units (14) being mounted at a segment of said annular frame (11) toward which said magnetic pendulum unit (12) approaches after passing by the imaginary point diametrically opposite to a corresponding one of said electromagnetic units (13) during rotation, each of said control units (14) being configured to turn on and off the corresponding one of said electromagnetic units (13).

4. The driving device (1) as claimed in claim 1, **characterized in that** said at least one control unit (14) includes:
a first sensor (141) electrically connected to said at least one electromagnetic unit (13) for turning on said at least one electromagnetic unit (13) upon detecting said magnetic pendulum unit (12); and
a second sensor (142) spaced apart from said first sensor (141) in a rotation direction of said magnetic pendulum unit (12), disposed between said first sensor (141) and said at least one electromagnetic unit (13), and electrically connected to said at least one electromagnetic unit (13) for turning off said at least one electromagnetic unit (13) upon detecting said magnetic pendulum unit (12).

5. The driving device (1) as claimed in claim 1, **characterized in that** said at least one electromagnetic unit (13) includes a core (131) and a winding coil (132) wound on said core (131).

6. The driving device (1) as claimed in claim 4 or 5, further **characterized in that** said pendulum unit (12) includes:
a lever (121) that has two opposite ends, one of said opposite ends being configured to be connected co-rotatably to the rotating shaft (21); and
two magnetic elements (122A, 122B) mounted on the other one of said opposite ends of said lever (121), being attractable by the magnetic force, spaced apart from each other in a direction parallel to the rotating shaft (21).

7. An electric generating system (10), **characterized by** the driving device (1) as claimed in any one of claims 1 to 6, and at least one generator unit (2, 2') configured to be connected to the driving shaft (21) for converting kinetic energy generated by said magnetic pendulum unit (12) into electric power.

8. The electric generating system (10) as claimed in claim 7, further **characterized by**:
an interconnecting component (31) configured to be connected to and driven by the rotating shaft (21) to rotate;
a main gear (32) connected to and driven by said interconnecting component (31);
a plurality of driven gears (331) meshing with and driven by said main gear (32); and
a plurality of said generator units (2') respectively connected to and driven by said driven gears (331) for converting kinetic energy into electric power.

9. The electric generating system (10) as claimed in claim 8, further **characterized in that** said main gear (32) is one of an external gear and an internal gear.
